# EUROPEAN PATENT APPLICATION

(11) **EP 1 821 232 A2**
(43) Date of publication of application: **22.08.2007**
(21) Application number: 07102409.5
(22) Date of filing: 14.02.2007
(51) Int. Cl.: G06F 21/00

(54) **Method and apparatus for transferring content license**

(30) Priority: 17.02.2006 KR 20060015707
(71) Applicant: Samsung Electronics Co., Ltd., Seoul 442-742 (KR)
(72) Inventor: Choi, Hyun-jin, Gyeonggi-do (KR); Jung, Kyung-im, Gyeonggi-do (KR); Jung, Myung-june, Gyeonggi-do (KR)
(74) Representative: Robinson, Ian Michael

(57) **Abstract**

A method and apparatus for transferring a content license are provided in which a license can be transferred between devices that use content even if a connection is not made with a device providing the corresponding content. The apparatus includes a license providing device that provides a license for specified content, and a license requesting device that acquires the license for the content from a content providing device, which provides the content in accordance with the license transferred from the license providing device.

## Description

Methods and apparatuses consistent with the present invention relate to transferring a content license, and more particularly, to transferring a content license, in which a license can be transferred between devices that use content even if a connection is not made with a device providing the corresponding content.

Generally, if a user intends to access a specified server through a network, such as the Internet, and intends to use content provided from the server, an authentication procedure for confirming whether the user has a license to use the content is commonly required. If it is confirmed that the user has the license to use the content provided from the server through the authentication procedure, the user can use the content by accessing the server.

On the other hand, if the user who has acquired the license to use the content by accessing the server through a specified device intends to use the corresponding content through another device, the license must be transferred from the specified device to the other device. In addition, if the anonymity of the device to which the license is transferred is to be secured, the transfer of the license is performed only if both the license providing device and the license receiving device are connected to the device providing the content.

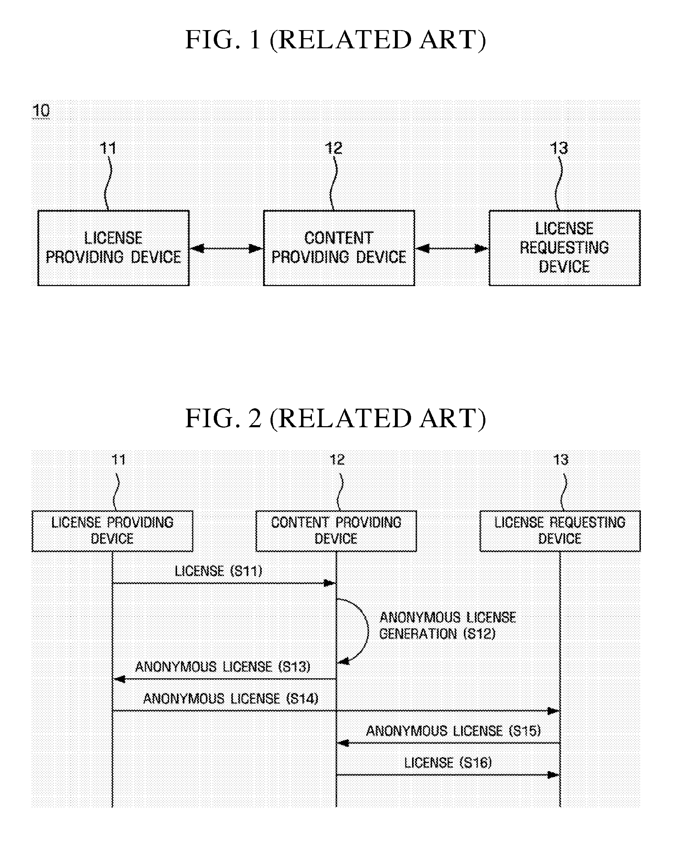

An apparatus 10 for transferring a license of content according to the related art, as shown in Figure 1, includes a license providing device 11 that has a license and provides the license, a content providing device 12 that provides content, and a license requesting device 13 that receives the license transferred from the license providing device 11 and uses the content provided from the content providing device 12 accordingly. In the apparatus 10 for transferring the content license, the license requesting device 13 receives the license from the license providing device 11 only if both the license providing device 11 and the license requesting device 13 are connected to the content providing device 12 through a network.

Figure 2 is a flowchart illustrating a process of transferring a license according to the related art. In this case, the anonymity of the device receiving the license is exemplified as being secured.

According to the flow of transferring the license according to the related art, as illustrated in Figure 2, the license providing device 11 transmits license A of the license providing device 11 itself to the content providing device 12 (S11). Then, the license providing device 11 provides the license to the content providing device 12 together with information required to generate an anonymous license of the device to which the license is to be transferred. The content providing device 12 generates the anonymous license based on license A transmitted from the license providing device 11 (S12).

The content providing device 12 transmits the generated anonymous license to the license providing device 11 (S13), and then the license providing device 11 transmits the anonymous license to the license requesting device 13 (S14). Thereafter, the license requesting device 13 transmits the anonymous license to the content providing device 12 and acquires license B to use specified content (S15).

In the related art system for transferring the content license, however, the content providing device 12 generates the anonymous license, and thus if the content providing device 12 is inaccessible, the license transfer cannot be performed.

Korean Patent Unexamined Publication No. 1998-0081635 discloses an information transmission system that uses a hash function for protecting information. The transmission system stores and outputs an ID code of a specified device, generates and transmits key information using received information, encrypts data through the hash function using the key information, and transmits the encrypted data. This system improves the security of transmitted information by preventing an illegal user from assuming the form of a legal user using a series of electronic equipment even when the data required to encrypt or decrypt the information is illegally used by the illegal user. However, a scheme for making the transfer of a license possible, even if the connection is not made with a content providing device, has not been proposed.

Exemplary embodiments of the present invention address at least some of the above disadvantages, or other disadvantages of the related art.

According to the present invention there is provided an apparatus and method as set forth in the appended claims. Preferred features of the invention will be apparent from the dependent claims, and the description which follows.

An aspect of the present invention is to provide a method and apparatus for transferring a content license, in which the anonymity of a device to which a license is transferred is secured, and the license can be securely transferred between devices using content even if a connection is not made with a device providing the corresponding content.

According to one aspect of the present invention, there is provided an apparatus for transferring a content license, the apparatus including a content information transmission unit that transmits content information regarding specified content to a device that requested the content license, a hash value reception unit that receives a hash value generated based on the transmitted content information from the device that requested the license, a license token generation unit that generates a license token of the device that requested the license, the license token including the license and being based on the received hash value, and a license token transmission unit that transmits the generated license token to the device that requested the license.

In another aspect of the present invention, there is provided an apparatus for transferring a content license, the apparatus including a content information reception unit that receives content information regarding specified content from a device having the content license, a hash value generation unit that generates a hash value based on the received content information, a hash value transmission unit that transmits the generated hash value to the device having the license, and a license token reception unit that receives a license token of the device having the license, the license token including the transmitted hash value and the license.

In still another aspect of the present invention, there is provided a method of transferring a content license, the method including transmitting content information regarding specified content to a device that requested the content license, receiving a hash value generated based on the transmitted content information from the device that requested the license, generating a license token of the device that requested the license, the license token including the license and being based on the received hash value, and transmitting the generated license token to the device that requested the license.

In still another aspect of the present invention, there is provided a method of transferring a content license, the method including receiving content information regarding specified content from a device having the content license, generating a hash value based on the received content information, transmitting the generated hash value to the device having the license, and receiving a license token from the device having the license, the license token including the transmitted hash value and the license.

The above and other aspects of the present invention will be more apparent from the following detailed description taken in conjunction with the accompanying drawings, in which:
Figure 1 is a block diagram illustrating the construction of a related art apparatus for transferring a license of content;
Figure 2 is a flowchart illustrating a related art process of transferring a license of content;
Figure 3 is a block diagram illustrating the construction of an apparatus for transferring a license of content according to an exemplary embodiment of the present invention;
Figure 4 is a block diagram illustrating the construction of a license providing device according to an exemplary embodiment of the present invention;
Figure 5 is a block diagram illustrating the construction of a license requesting device according to an exemplary embodiment of the present invention;
Figure 6 is a block diagram illustrating the construction of a content providing device according to an exemplary embodiment of the present invention;
Figure 7 is a flowchart illustrating a method of providing a license of content according to an exemplary embodiment of the present invention;
Figure 8 is a flowchart illustrating a method of requesting a license of content according to an exemplary embodiment of the present invention; and
Figure 9 is a flowchart illustrating a process of transferring a license of content according to an exemplary embodiment of the present invention.

Hereinafter, exemplary embodiments of the present invention will be described in detail with reference to the accompanying drawings. However, the present invention is not limited to the exemplary embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

The exemplary embodiments of the present invention will be described herein with reference to the accompanying drawings illustrating block diagrams and flowcharts for explaining an apparatus and method of transferring a content license according to exemplary embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Also, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

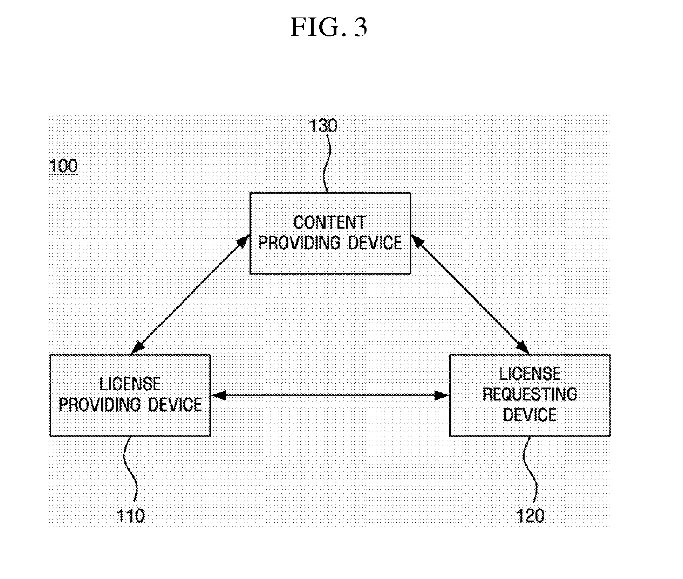

Figure 3 is a block diagram illustrating the construction of an apparatus for transferring a license of content according to an exemplary embodiment of the present invention.

As illustrated in Figure 3, the apparatus 100 for transferring a license of content according to an exemplary embodiment of the present invention includes a license providing device 110, a license requesting device 120, and a content providing device 130. The license providing device 110 has a license for specified content provided from the content providing device 130, and the license requesting device 120 requests the license for the specified content from the license providing device 110 and uses the content provided by the content providing device 130.

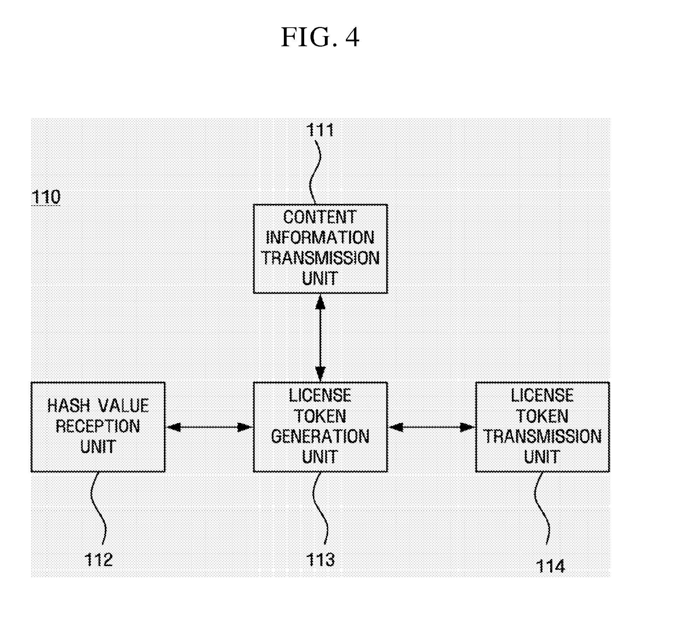

Figure 4 is a block diagram illustrating the construction of a license providing device according to an exemplary embodiment of the present invention.

As illustrated in Figure 4, the license providing device 110 according to an exemplary embodiment of the present invention includes a content information transmission unit 111 that transmits content information regarding specified content to the license requesting device 120 in accordance with a license request from the license requesting device 120; a hash value reception unit 112 that receives a hash value generated based on the content information transmitted from the content information transmission unit 111 from the license requesting device 120; a license token generation unit 113 that generates a license token of the license requesting device 120, the license token including the license of the specified content and being based on the received hash value; and a license token transmission unit 114 that transmits the generated license token to the license requesting device 120.

In the exemplary embodiment of the present invention, the license is exemplified as being transferred in a state in which the license providing device 110 and the license requesting device 120 are not connected to the content providing device 130. This is because, if the license providing device 110 and the license requesting device 120 are connected to the content providing device 130, the license may be transferred through the content providing device 130. In addition, in the exemplary embodiment of the present invention, the license providing device 110 and the license requesting device 120 are exemplified as being connected together through a local-area communication network, such as WLAN, Bluetooth, WPAN, UWB, or other network.

The content information transmission unit 111 transmits the content information (e.g., content ID, and so on) corresponding to the license of the license providing device 110 to the license requesting device 120. The content information transmission unit 111 encrypts the content information with an encryption key of the license providing device and transmits the encrypted content information to the license requesting device 120. A certificate of the license providing device 110 may also be encrypted with the encryption key of the license providing device 110 and transmitted to the license requesting device 120 together with the content information.

The hash value reception unit 112 receives a hash value generated by the license requesting device 120 after the content information transmission unit 111 transmits the content information regarding the specified content to the license requesting device 120. The hash value includes a specified random number generated based on the license requesting device 120, information on the license providing device 110, and the content information. In addition, the hash value received in the hash value reception unit 112 may be encrypted based on the encryption key of the license providing device 110 or an encryption key shared by the license providing device 110 and the license requesting device 120.

The license token generation unit 113 includes the received hash value and the license of the license providing device 110. In the exemplary embodiment of the present invention, the license that the license providing device 110 has with respect to the specified content is called "license A". In addition, the license token generation unit 113 may encrypt the generated license token with the encryption key of the license providing device 110 in order to indicate that the license token has been generated from the license providing device 110. The license token transmission unit 114 transmits the generated license token to the license requesting device 120.

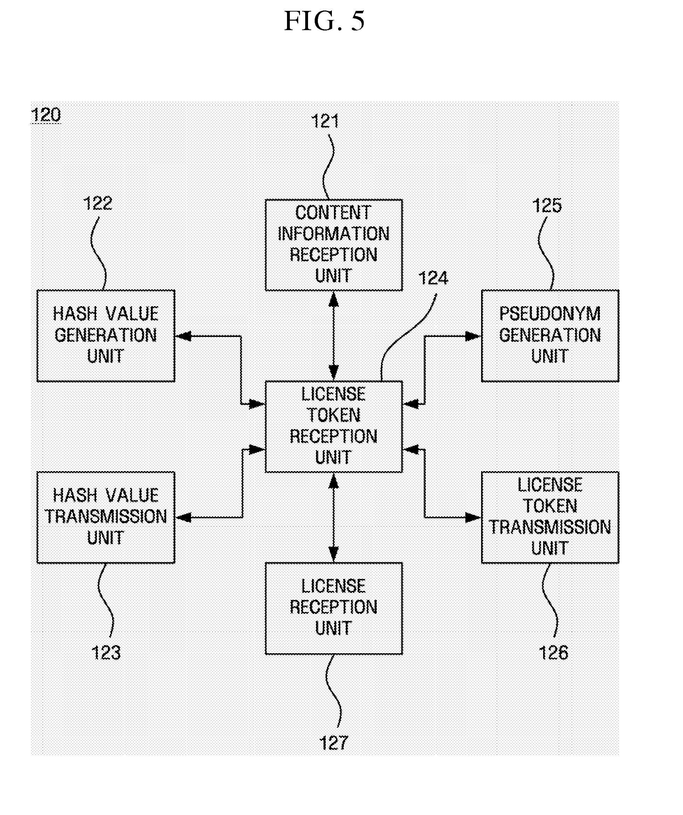

Figure 5 is a block diagram illustrating the construction of a license requesting device according to an exemplary embodiment of the present invention.

As illustrated in Figure 5, the license requesting device 120 according to an exemplary embodiment of the present invention includes a content information reception unit 121 that receives content information regarding specified content from the license providing device 110, a hash value generation unit 122 that generates a hash value based on the received content information, a hash value transmission unit 123 that transmits the generated hash value to the license providing device 110, and a license token reception unit 124 that receives a license token including the hash value transmitted from the license providing device 110 and license A of the license providing device 110 from the license providing device 110.

The content information reception unit 121 receives the content information corresponding to the license of the license providing device 110, and the received content information may be encrypted by an encryption key of the license providing device 110.

The hash value generation unit 122 generates a specified random number in addition to the received content information and generates the hash value based on the generated random number, the content information, and information regarding the license providing device 110. In this case, the generated hash value may be transmitted to the license providing device 110 through the hash value transmission unit 123, or may be encrypted by the encryption key of the license providing device 110 or an encryption key shared by the license providing device 110 and the license requesting device 120.

The license token reception unit 124 receives the license token generated by the license providing device 110 in accordance with the hash value transmitted from the hash value transmission unit 123 to the license providing device 110. The license token may include the hash value and license A of the license providing device 110. In addition, the received license token may be electronically signed with the encryption key of the license providing device 110 in order to prove that the license token has been generated by the license providing device 110.

On the other hand, if the license requesting device 120 receives the license token from the license providing device 110, the license requesting device 120 stores the received license token and waits to connect with the content providing device 130. In the exemplary embodiment of the present invention, the license is exemplified as being transferred from the license providing device 110 if the license requesting device 120 is not connected to the content providing device 130. If the license requesting device 120 is connected to the content providing device 130 before the license requesting device 120 receives the license, the license requesting device 120 can receive the license of the license providing device 110 through the content providing device 130.

In addition, in the exemplary embodiment of the present invention, the anonymity of the license requesting device 120 is exemplified as being secured. This means that the license requesting device 120 can use a specified pseudonym with respect to the license providing device 110 or the content providing device 130.

Accordingly, in the exemplary embodiment of the present invention, the license requesting device 120 may further include a pseudonym generation unit 125 generating a specified pseudonym, a license token transmission unit 126 transmitting the license token received from the license providing device 110 to the content providing device 130 when the connection with the content providing device 130 is made, and a license reception unit 127 receiving the license of specified content from the content providing device 130.

When the connection with the content providing device 130 is made, the license token transmission unit 126 of the license requesting device 120 transmits the pseudonym generated by the pseudonym generation unit 125, the license token received from the license providing device 110, and the random number generated by the hash value generation unit 122, to the content providing device 130.

In this case, the content providing device 130 confirms the hash value included in the license token through the received random number, converts license A of the license providing device 110 into license B of the received pseudonym and transmits the converted license B to the license requesting device 120. The license requesting device 120 may encrypt the random number, the license token, and the pseudonym through the encryption key, together with its own certificate, when the license requesting device 120 transmits the random number, the license token, and the pseudonym, to the content providing device 130.

On the other hand, the license reception unit 127 receives and stores license B transmitted from the content providing device 130, and the license requesting device 120 can use the content provided from the content providing device 130 through the received license B.

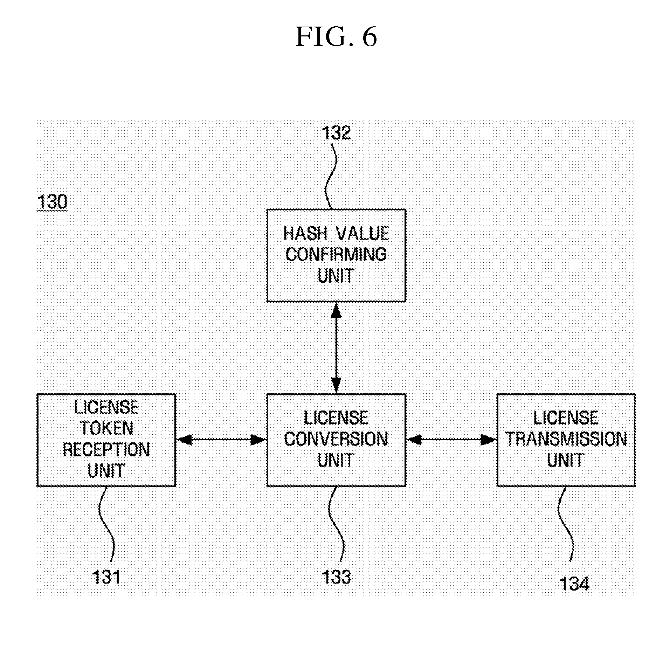

Figure 6 is a block diagram illustrating the construction of a content providing device according to an exemplary embodiment of the present invention.

As illustrated in Figure 6, the content providing device 130 according to an exemplary embodiment of the present invention includes a license token reception unit 131 that receives the random number, the pseudonym, and the license token, from the license requesting device 120 when the connection with the license requesting device 120 is made, a hash value confirming unit 132 that confirms the hash value included in the received license token, a license conversion unit 133 that converts license A of the license providing device 110 included in the license token into license B of the license requesting device 120 using the pseudonym, in accordance with the confirmation of the hash value, and a license transmission unit 134 that transmits the converted license B to the license requesting device.

If the license requesting device 120 is confirmed valid by the hash value confirming unit 132, the license conversion unit 133 converts license A into license B of the license requesting device 120 using the pseudonym. In the exemplary embodiment of the present invention, the anonymity of the license requesting device 120 is secured, and thus the license conversion unit 133 converts the license into the license for the pseudonym that the license requesting device 120 uses. In addition, the license transmission unit 134 may transmit license B encrypted by the encryption key of the license requesting device 120.

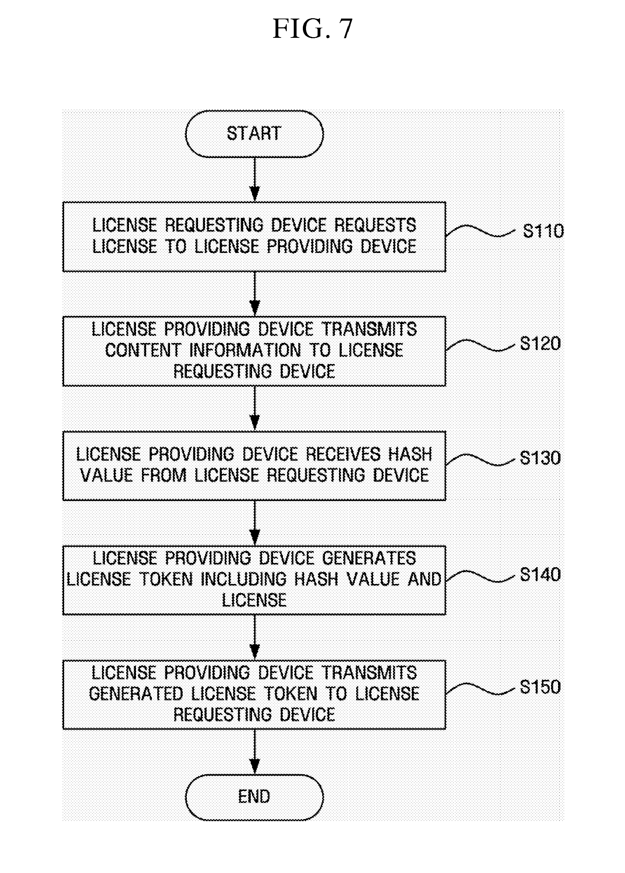

Figure 7 is a flowchart illustrating a method of providing a license of content according to an exemplary embodiment of the present invention.

As illustrated in Figure 7, in the method of providing a license according to an exemplary embodiment of the present invention, the license requesting device 120 requests a license for specified content to the license providing device 110 (S110). In the exemplary embodiment of the present invention, the license providing device 110 or the license requesting device 120 is exemplified as not being connected to the content providing device 130, and thus the transfer of the license through the content providing device 130 is impossible. In addition, the anonymity of the license requesting device 120 is exemplified as being secured.

The license providing device 110 transmits the content information on the content having the license to the license requesting device 120 in accordance with the license request from the license requesting device 120 (S120). According to circumstances, the content information may be encrypted with the encryption key of the license providing device 110, and the certificate of the license providing device 110 may be transmitted together with the content information.

The license providing device 110 receives a hash value generated according to the content information transmitted from the license requesting device 120 (S130). In this case, the received hash value may be generated based on the random number generated by the license requesting device 120, information on the license providing device 110, and the content information. The received hash value may be encrypted with the encryption key of the license providing device 110 or the encryption key shared by the license providing device 110 and the license requesting device 120.

The license providing device 110 generates the license token including the received hash value and the license of the license providing device (S140) and transmits the generated license token to the license requesting device 120 (S150). In this case, the license token transmitted to the license requesting device 120 may be electronically signed with the encryption key of the license providing device 110 to indicate that the license token has been generated by the license providing device 110.

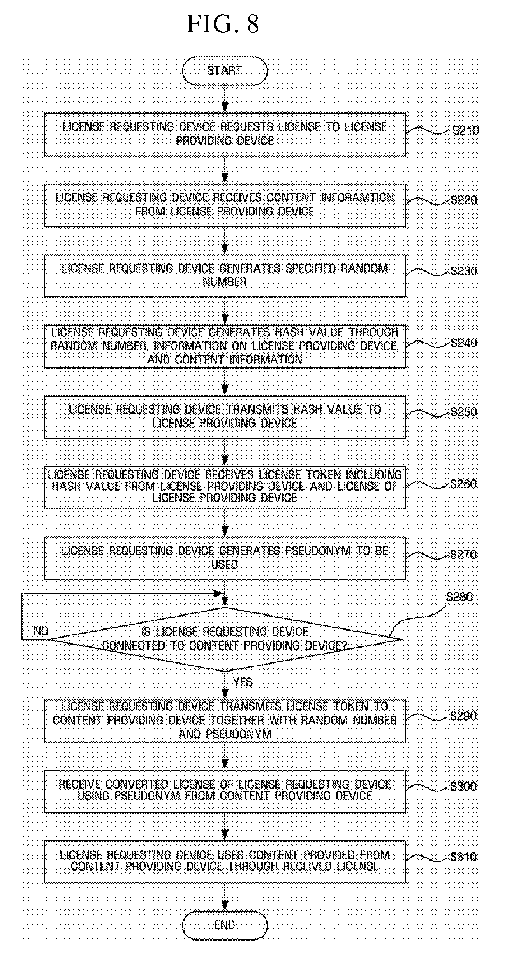

Figure 8 is a flowchart illustrating a method of requesting a license of content according to an exemplary embodiment of the present invention.

As illustrated in Figure 8, in the method of requesting a license according to an exemplary embodiment of the present invention, the license requesting device 120 requests a license for specified content to the license providing device 110 (S210). In this case, the license providing device 110 and the license requesting device 120 are exemplified as not being connected to the content providing device 130, and thus the transfer of the license through the content providing device 130 is impossible. In addition, the anonymity of the license requesting device 120 is exemplified as being secured.

The license requesting device 120 receives the content information on the specified content from the license providing device 110 (S220). In this case, the content information may be encrypted by the encryption key of the license providing device 110, and according to circumstances, the certificate of the license providing device 110 may be received together with the content information.

The license requesting device 110 generates a specified random number (S230), and generates a hash value through the generated random number, information on the license providing device 110, and the content information (5240) .

The license requesting device 110 transmits the generated hash value to the license providing device 110 (S250), and receives the license token including the hash value from the license providing device 110 and the license of the license providing device 110 (S260). In this case, the received license token may be electronically signed by the encryption key of the license providing device 110 in order to indicate that the license token has been generated by the license providing device 110.

In addition, in the exemplary embodiment of the present invention, the anonymity of the license requesting device 120 is exemplified as being secured, and thus the license requesting device 120 generates a specified pseudonym (S270).

The license requesting device 110 stores the received license token and judges whether the license requesting device 110 is connected with the content providing device 130 (S280). If the license requesting device 110 is judges as being connected to the content providing device 130, the license requesting device 120 transmits the pseudonym, the random number, and the license token to the content providing device 130 (S290).

Then, the license requesting device 120 receives the license of the license requesting device 120 using the pseudonym, which has been converted from the license of the license providing device 110, from the content providing device 130 (S300). In other words, the license token transmitted from the license requesting device 120 to the content providing device 130 includes license A of the license providing device 110. In this case, the content providing device 130 confirms the hash value included in the license token through the received random number, converts license A into license B of the license requesting device 120 using the pseudonym, and transmits the converted license B to the license requesting device 120.

The license requesting device 120 uses the content provided from the content providing device 130 through the received license B (S310).

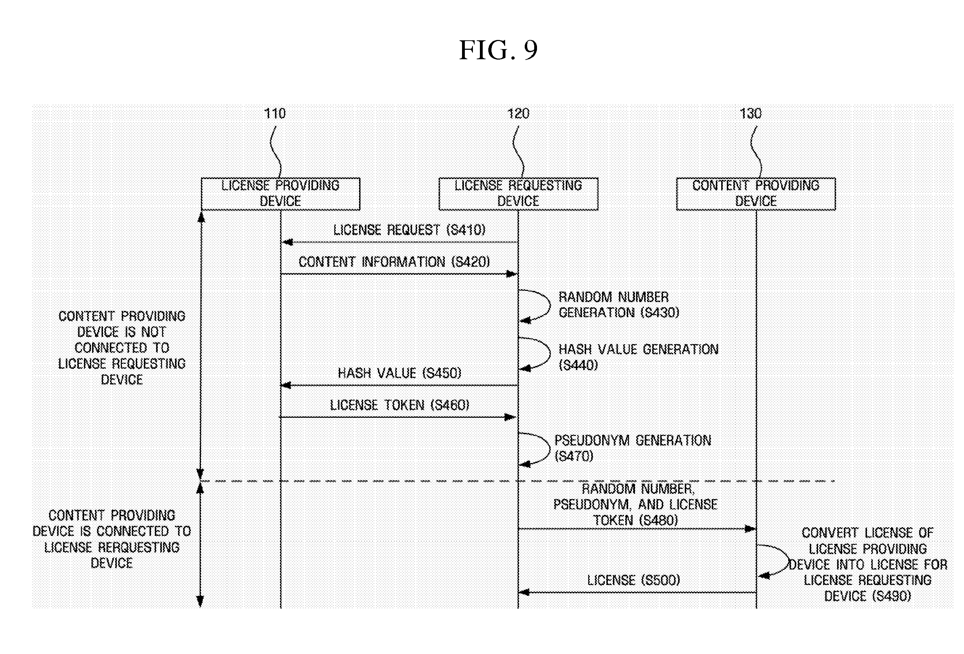

Figure 9 is a flowchart illustrating a process of transferring a license of content according to an exemplary embodiment of the present invention. In Figure 9, the license requesting device 120 is exemplified as not being connected to the content providing device 130 when the license requesting device 120 receives the license from the license providing device 110, and then is connected to the content providing device 130 after it receives the license from the license providing device 110.

As illustrated in Figure 9, the license requesting device 120 requests a license for specified content from the license providing device 110 (S410). The license providing device 110 transmits the content information of the content having the license to the license requesting device 120 according to the request of the license requesting device 120 (S420). In this case, the content information transmitted to the license requesting device 120 may be encrypted with the encryption key of the license providing device 110 and may be transmitted together with the certificate of the license providing device 110.

The license requesting device 120 generates a specified random number (S430), and generates a hash value based on the generated random number, the information on the license providing device 110, and the content information (S440). The license requesting device 120 transmits the generated hash value to the license providing device 110 (S450), and the license providing device 110 generates and transmits the license token including the received hash value and the license of the license providing device to the license requesting device 120 (S460). In this case, the hash value transmitted to the license providing device 110 may be encrypted by the encryption key of the license providing device 110 or a shared encryption key. In addition, the license token received by the license requesting device 120 may be electronically signed with the encryption key of the license providing device 110 in order to indicate that the license token has been generated by the license providing device 110.

In the exemplary embodiment of the present invention, the license requesting device 120 is exemplified as not being connected to the content providing device 130 until the license requesting device 120 receives the license token from the license providing device 110.

The license requesting device 120 having received the license token transmitted from the license providing device 110 generates a pseudonym for securing the anonymity (S470) and waits to connect with the content providing device 130.

When the license requesting device 120 is connected to the content providing device 130, the license requesting device 120 transmits the random number, the pseudonym, and the license token to the content providing device 130 (S480). In this case, the license token transmitted to the content providing device 130 may include the hash value and license A that is the license of the license providing device 110.

The content providing device 130 confirms the hash value included in the license token through the random number transmitted from the license requesting device 120, converts license A of the license providing device 110 into license B of the license requesting device 120 using the pseudonym (S490), and transmits license B to the license requesting device 120 (S500).

If no security channel is provided in the license requesting device 120 and the content providing device 130, the random number, the pseudonym, and the license token may be encrypted with the encryption key shared by the license requesting device 120 and the content providing device 130. Information indicating that the license token has been generated by the license providing device 110 may also be transmitted to the content providing device 130. The encryption key and the certificate of the license requesting device 120 may also be transmitted to the content providing device 130. In addition, the license transmitted from the content providing device 130 to the license requesting device 120 may be encrypted with the encryption key of the license requesting device 120.

In the exemplary embodiments of the present invention, the term "unit", as used herein, means, but is not limited to, a software or hardware component, such as a Field Programmable Gate Array (FPGA) or Application Specific Integrated Circuit (ASIC), which performs certain tasks. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units.

As described above, according to the an apparatus and method of transferring a content license according to the exemplary embodiments of the present invention, a license of content can be securely transferred between devices using the content with their anonymities secured even if a connection is not made with a device providing the corresponding content.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for transferring a content license, the apparatus comprising:
a content information transmission unit (111) that transmits content information regarding specified content to a device that requested the content license;
a hash value reception unit (112) that receives a hash value generated based on the transmitted content information from the device that requested the license;
a license token generation unit (113) that generates a license token of the device that requested the license, the license token including the license and being based on the received hash value; and
a license token transmission unit (114) that transmits the generated license token to the device that requested the license.

2. The apparatus of claim 1, wherein the device that requested the license generates a specified random number and generates the hash value according to the generated random number, the transmitted content information, and information regarding the device that transmitted the content information.

3. The apparatus of claim 1 or 2, wherein the license token comprises the received hash value and a license of the device that transmitted the content information.

4. The apparatus of claim 1, 2 or 3, wherein the license token transmission unit (114) encrypts the generated license token with an encryption key of the device that generated the license token.

5. An apparatus for transferring a content license, the apparatus comprising:
a content information reception unit (121) that receives content information regarding specified content from a device having the content license;
a hash value generation unit (122) that generates a hash value based on the received content information;
a hash value transmission unit (123) that transmits the generated hash value to the device having the license; and
a license token reception unit (124) that receives a license token from the device having the license, the license token including the transmitted hash value and the license.

6. The apparatus of claim 5, wherein the received content information is encrypted with an encryption key of the device having the license.

7. The apparatus of claim 5 or 6, wherein the hash value generation unit (122) generates a specified random number and generates the hash value in accordance with the generated random number, the received content information, and information regarding the device having the license.

8. The apparatus of claim 5, 6 or 7, wherein the license token comprises the hash value and the license of the device having the license.

9. The apparatus of claim 7, further comprising:
a pseudonym generation unit (125) that generates a specified pseudonym;
a license token transmission unit (126) that transmits the generated pseudonym, the generated random number, and the license token to a device that provides the content; and
a license reception unit (127) that receives the content license from the device having provided the content.

10. The apparatus of claim 9, wherein the device providing the content confirms the hash value included in the license token based on the random number and converts the license of the device having the license included in the license token into a license of a device using the pseudonym.

11. The apparatus of claim 10, wherein the device providing the content encrypts the converted license with an encryption key of the device using the pseudonym.

12. A method of transferring a content license, the method comprising:
transmitting content information regarding specified content to a device that requested the content license;
receiving a hash value generated based on the transmitted content information from the device that requested the license;
generating a license token of the device that requested the license, the license token including the license and being based on the received hash value; and
transmitting the generated license token to the device that requested the license.

13. The method of claim 12, wherein the device that requested the license generates a specified random number and generates the hash value in accordance with the generated random number, the received content information, and information regarding the device that transmitted the content information.

14. The method of claim 12 or 13, wherein the license token comprises the received hash value and a license of the device that transmitted the content information.

15. The method of claim 12, 13 or 14, wherein the transmitting of the license token comprises encrypting the generated license token with an encryption key of the device that generated the license token and transmitting the encrypted license token.

16. A method of transferring a content license, the method comprising:
receiving content information regarding specified content from a device having the content license;
generating a hash value based on the received content information;
transmitting the generated hash value to the device having the license; and
receiving a license token including the transmitted hash value and the license from the device having the license.

17. The method of claim 16, wherein the received content information is encrypted with an encryption key of the device having the license.

18. The method of claim 16 or 17, wherein the generating of the hash value comprises:
generating a specified random number; and
generating the hash value in accordance with the generated random number, the received content information, and information regarding the device having the license.

19. The method of claim 16, 17 7 or 18, wherein the license token comprises the hash value and the license of the device having the license.

20. The method of claim 18, further comprising:
generating a specified pseudonym;
transmitting the generated pseudonym, the generated random number, and the license token to a device that provides the content; and
receiving the content license from the device that provided the content.

21. The method of claim 20, wherein the device that provides the content confirms the hash value included in the license token through the random number and converts the license of the device having the license included in the license token into a license of the device using the pseudonym.

22. The method of claim 21, wherein the device providing the content encrypts the converted license with an encryption key of the device using the pseudonym.
